# EUROPEAN PATENT APPLICATION

(11) **EP 3 113 416 A2**
(43) Date of publication of application: **04.01.2017**
(21) Application number: 16460041.3
(22) Date of filing: 30.06.2016
(51) Int. Cl.: H04L 12/26, H04L 12/24

(54) **A METHOD AND SYSTEM FOR DIAGNOSING AND REPAIRING A DEVICE WITH NETWORK ACCESS**

(30) Priority: 01.07.2015 PL 41298015
(71) Applicant: Orange Polska Spolka Akcyjna, 02-326 Warszawa (PL)
(72) Inventor: BORKOWSKI, Jacek, 08-110 Siedlce (PL); KRAJEWSKI, Lukasz, 18-300 Zambrów (PL); CISZKOWSKI, Tomasz, 01-102 Warszawa (PL)
(74) Representative: Palka, Grazyna

(57) **Abstract**

The method provides that by means of the communication device (1) a communication channel is compiled in the transmission medium between the communication device (1) and the a device (2) with network access and between the communication device (1) and the operator's system (3). Then, by means of the transmission medium of the communication channel, identification data and diagnostic data is sent from the device (2) with network access via a communication device (1) to the operator's system (3), then a repair command is sent from the operator's system (3) via the communication device (1) to the device (2) with network access, and after repairing the device (2) with network access compiled communication channel is closed.

The system comprises the device (2) with network access connected with the operator's system (3) through the communication device (1) which compiles the communication channel with the device (2) and the operator's system (3).

## Description

The object of the invention is a method for diagnosing and repairing a device with network access and a system for diagnosing and repairing a device with network access.

In the event of a failure of a device with network access its user, using known repair methods and systems can send, for example, to the operator a notification only of the device failure, along with basic information about the condition of the device.

Patent US6671883B1 discloses a method and device for restoring the connection. Presented method of providing communication between the set-top box and the target network through the second gateway (head end) includes detecting, at the first gateway when there is no connection between the set-top box and the target network, initiating, via wireless communication, a telephone connection from the first gateway to the second gateway and complementing the connection between the second gateway and set-top box to provide the communication between the set-top box and the target network. Connection via wireless communication transmits at least one of the set-top box identifiers, first control station identifier and target network identifier. This solution, in the absence of communication, uses wireless communication and allows the establishment of alternative connection, but without the use of remote fault diagnostics.

Application EP2681919A1 discloses a television receiver management method including scanning the two-dimensional bar code, which carries information about the condition of the television receiver from a device display to a portable device. The solution allows to determine the condition of the receiver and send the information about the condition to the endpoints, located outside the receiver. The television receiver creates a two-dimensional bar code, in response to the detection of the television receiver condition, from the condition information of the receiver and displays it on the display device. This displayed bar code can be scanned by a portable device, wherein the condition information of the receiver can be stored, processed and/or transmitted to another location or device. With the occurrence of error conditions, a mobile device can transmit the two-dimensional bar code or the information encoded in the two-dimensional bar code to, for example, a service provider who can perform the repair. The portable device can also be mobile and store information about the configuration or settings of the receiver for future use by the television receiver.

Application US20120261465A1 discloses a solution concerning technical support methods and systems. The method includes obtaining via a media resources access device, information requesting technical support from the user of the media resources access device. Then the data, presenting the information requesting technical support, is coded by the access device onto a bar code, which is then displayed on the display device connected to the media resources access device. The information requesting technical support comprises at least one call-back number, date of the call-back time, call-back interval and contact name. The method further comprises transmitting, by the portable device, the data representing the image to a remote target support subsystem, which receives the data and decodes the bar code to obtain the information requesting technical support. Then the remote technical support subsystem performs one or more technical support tasks, for example the initiation of a telephone call between the user and technical support, and performs one or more tests associated with the media resources access device. To a certain extent the solutions allows a remote diagnostics initiated by scanning the code and sending it to the technical support system through an alternative link.

In many existing systems and methods for repairing device with network access the customer only reports the failure, but does provide the consultant with any additional technical parameters of the device that can help the consultant to identify the device and diagnose the failure. If the failure involves absence of Internet access, the operator/consultant is not able remotely check the condition of the device. Most customers do not have adequate technical knowledge, which could be helpful in the implementation of the notification. The solution according to the invention is a way of establishing connection to the technical support hotline, enriched by sending to the hotline the information concerning condition of the device that does not have or has lost contact with the operator's systems. This allows the consultant to remotely check the condition of the device and perform possible repairs, while minimizing the involvement of the customer. The invention enables improvement of the process for reporting a failure of customer devices whose remote diagnostics is hampered by lack of communication with the network operator.

A method for diagnosing and repairing device with network access, is characterized in that by means of a communication device a communication channel is compiled in the transmission medium between the communication device and a device with network access and the communication channel is compiled in the transmission medium between the communication device and at least one operator's system, then, by means of the transmission medium of the communication channel, identification data is sent and at least once the diagnostic data from the device with network access is sent via the communication device to at least one operator's system, then at least once by means of the transmission medium of the communication channel, repair command is sent from at least one operator's system via the communication device to the device with network access, and after repairing the device with network access at least one compiled communication channel is closed.

Preferably, diagnostic data, by means of the communication channel transmission medium, is sent in response to at least one inquiry about the status of the device with network access sent from the operator's system.

Preferably, while repairing the device with network access the connection of the device with network access with the access network is repaired too.

Preferably, in the case of a negative outcome of automatic repair of the device with network access by means of the operator's system and via the communication device repair instructions are sent to the user and/or failure of the connection of the device with network access and the access network is recorded.

Preferably, the communication channel between the communication device and the device with network access is compiled based on the information read from an information element associated with the device with network access, wherein the information element is used during the reading, being one of the group including for example: QR code, bar code, NFC tag, RFID tag, an optical label for OCR.

Preferably, the communication channel between the communication device and the device with network access is compiled manually.

Preferably, the information element is used during the reading, comprising data of the communication channel compilation and/or identification data of the device with network access, additionally the information element being one of the group including for example: QR code, bar code, NFC tag, RFID tag, an optical label for OCR is used during the reading.

Preferably, communication channels are compiled in at least one technology from a group including for example: Wi-Fi, Bluetooth, tethering, voice call, IVR, SMS, e-mail, REST, higher layer communication protocols, 3G, GPRS, EDGE, LTE, 5G data transmission, dtmf during a call, USSD, fixed line network; additionally a device from a group including for example: a phone, PDA, tablet, phablet, laptop, notebook, desktop, smartphone, smart watch, smart glasses is used as a communication device; and a device from a group including for example: CPE class devices, such as a modem, router, switch, set-top box, VoIP gateway, PBX devices, firewalls, game consoles, devices for managing smart home, TVs, cars, household appliances and IoT and M2M class equipment is used as a device with network access.

Preferably, as diagnostic data at least one from a group including: port status of the device with network access, statistics on packets exchanged on each network interface of the device with network access, error status of the device with network access, is used; as the identification data and/or the compilation data of the communication channel at least one from a group including: a network ID, key, the encoding set on the device with network access, hardware address, serial number, a hotline phone number, is used.

Preferably, the method steps performed by the communication device are performed under the control of a computer program.

A system for diagnosing and repairing device with network access, comprising a communication device and at least one operator's system, characterized in that the device with network access is connected with at least one operator's system via the communication device which compiles a communication . channel with the device with network access and at least one operator's system.

Preferably, the device with network access is connected to an information element, and the information element is one of a group including for example: a QR code, bar code, NFC tag, RFID tag, an optical label for OCR.

Preferably, communication channels are compiled in at least one technology from a group including for example: Wi-Fi, Bluetooth, tethering, voice call, IVR, SMS, e-mail, REST, higher layer communication protocols, 3G, GPRS, EDGE, LTE, 5G data transmission, dtmf during a call, USSD, fixed line network; wherein a communication device is one from a group including for example: a phone, PDA, tablet, phablet, laptop, notebook, desktop, smartphone, smart watch, smart glasses; and a device with network access is one from a group including for example: CPE class devices, such as a modem, router, switch, set-top box, VoIP gateway, PBX devices, firewalls, game consoles, devices for managing smart home, TVs, cars, household appliances and IoT and M2M class equipment.

Preferably, the communication device using a computer program is adapted to perform at least one of the tasks from a group including reading the information from an information element, a compilation of the communication channel, and performance of the instructions sent by at least one operator's system.

Preferably, the computer program comprises a configuration module of the compiled channel, a module of acquiring the technical status of the device and a module for reading identification parameters.

In the solution, at least one repair command of a group including: restart, reconfiguration, firmware update, sending a signal to restore the default settings on the device, sending a signal to restore the factory settings on the device, sending the signal setting login and password to connect to the access network, sending a signal setting characteristic parameters of the network configuration, is required to compile the connection with the access network.

The solution according to the invention may be used for all the customers of the service providers providing access to the Internet and other services provided by means of electronic equipment located at the customer premises. All customers equipped with a telephone with a camera or NFC reader, for example, can use the invention.

Technical support receives information that will help to identify the device and understand the current technical condition, making the process of diagnosing damage more effective.

The advantages and beneficial effects of the solution according to the invention are:
- allowed access to an alternative channel of transmission of data on the device in case of failure of communication between the device with network access and the network operator;
- the ability to analyse the condition of the device with network access by the operator even in the absence of Internet connection on the device;
- more precise fault diagnostics;
- the ability to diagnose and repair a higher percentage of failures at the first contact with the hotline;
- reducing the length of calls related to the simplest failures;
- reducing the number of maintenance interventions at the premises of a user;
- automating the process of handling failure notifications;
- reducing customer engagement to a minimum;
- enhanced standard of service.

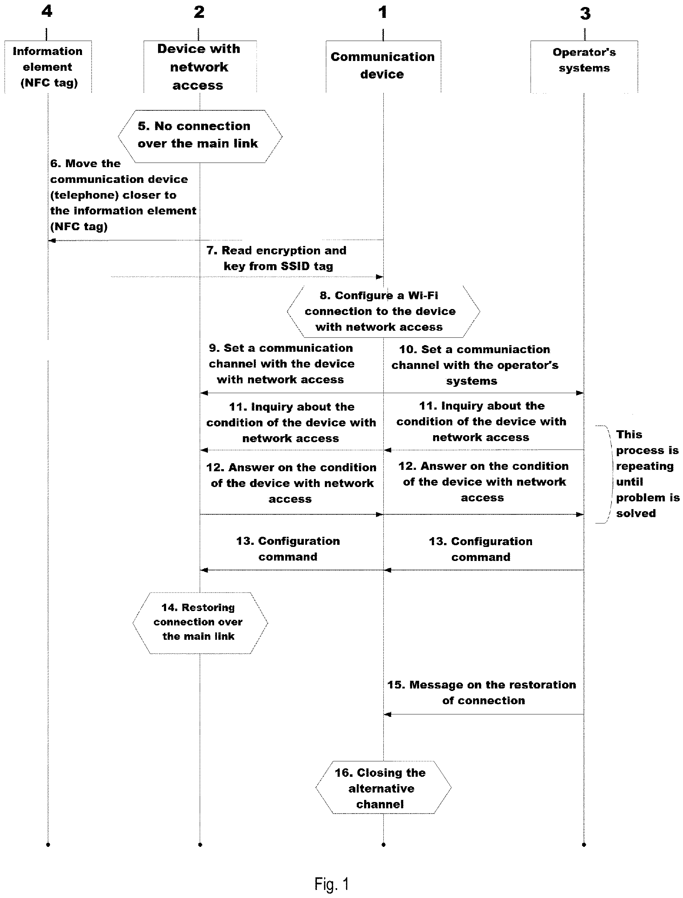

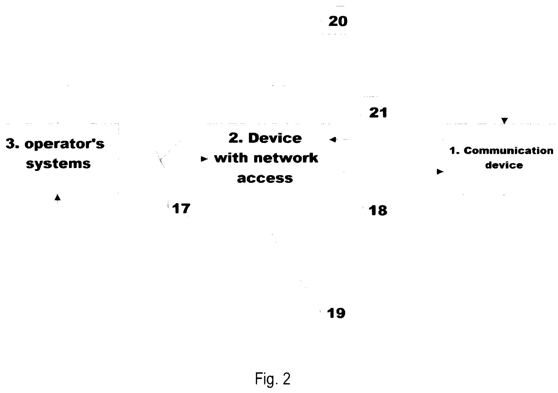

The object of the invention is shown in the embodiments in the drawing, in which fig. 1 shows a MSC scheme of the method for diagnosing and repairing device with network access, fig. 2 - a block diagram of the system for diagnosing and repairing device with network access.

The list of designations:
1 - communication device;
2 - device with network access;
3 - operator's systems;
4 - information element;
5 - no connection over the main link;
6 - move the communication device (telephone) closer to the information element (NFC tag);
7 - read encryption and key from SSID tag;
8 - configure a Wi-Fi connection to the device with network access;
9 - set a communication channel with the device with network access;
10 - set a communication channel with the operator's systems;
11 - inquiry about the condition of the device with network access;
12 - answer on the condition of the device with network access;
13 - configuration command;
14 - restoring connection over the main link;
15 - message on the restoration of connection;
16 - closing the alternative channel;
17 - no connection;
18 - sending the diagnostics of a damaged device;
19 -data transfer to the operator's systems;
20 -data transfer from the operator's systems;
21 - sending the parameters allowing the failure repair;

The solution according to the invention allows compilation, by a communication device 1, of an alternative communication device for transferring data between the operator's systems 3 and the customer's device 2 with network access in the absence of the main link for diagnostics and for remote/automatic repair.

Communication devices 1, providing an additional communication channel in the embodiments may include for example a phone, PDA, tablet, phablet, laptop, notebook, desktop, smartphone, smart watch, smart glasses These devices have a dedicated application installed, for example, downloaded from the Internet, which helps in the process of diagnosing and repairing the link. These devices are provided with an active data connection, ensuring the connection with the operator's systems in 3G, GPRS, EDGE, LTE technology and with a wireless communication module, and may be provided for example with the NFC module.

In various embodiments, the communication channels can be compiled for example in the following technologies: Wi-Fi, Bluetooth, tethering, voice call, IVR, SMS, e-mail, REST, higher layer communication protocols, 3G, GPRS, EDGE, LTE, 5G data transmission, dtmf during a call, USSD, fixed line network.

The device 2 with network access in the embodiments may be:
Customer Premises Equipment, game consoles, devices for managing smart home, TVs, cars, household appliances and IoT and M2M class equipment.

Customer Premises Equipment are the end devices on telecommunications network, installed at the customer's premises, allowing Internet access to various kinds of devices with Wi-Fi, for example, smartphones, tablets and game consoles, as well as computers. Customer Premises Equipment includes a modem, switch, set-top box, VoIP gateway, PBX, firewall, router, for example VDSL router.

Private Branch Exchange equipment is a telephone exchange owned and managed by the user, creating an internal telephone network of the company and combined with the telephone company headquarters with a few lines.

Internet of Things equipment is a device defined by the concept, according to which uniquely identifiable objects may directly or indirectly collect, process and exchange data via a computer network.

The operator's system presented in the embodiment is a set of ICT tools of a centralized network management and supervision system that are supported by qualified technical support and are designed to automate the process of identification and diagnosis of failures of the networks and device with network access and are able to carry out the process of their removal.

However, technical support is to be understood as:
a) a suitably qualified employee who is able to diagnose the problem and determine its solution on the basis of the parameters of the device with network access;
b) IT system, i.e. support of a decision-making process, which is able to automatically analyse the uploaded parameters of the network access advice, then diagnose them and indicate the path to solve the problem.

Technical support employees are aided by automated systems for analysing, diagnosing and recommending the solutions to the problems.

A communication channel in the embodiments is a connection allowing the communication between two parties exchanging information. The communication channel is a physical medium, e.g. air, copper wire or computer network. If many communication channels share a common transmission medium then different broadcasters may interfere with each other. The transmission medium is to be understood as a carrier used to transmit signals in telecommunications as a fundamental component of telecommunications systems. There are wired transmission media, such as a symmetrical cable, coaxial cable, fibre optic cable, power cables and wireless transmission media, i.e. radio waves and light waves.

In an embodiment of the method and system of the invention, the operator places a special information element 4, for example, an NFC tag/maker 4 on the device 2 with network access, which allows pairing of a mobile phone 1 and the device 2 with network access. If the client detects a failure of his device 2 with network access, meaning a lack of 5 communication on the main link, he approaches it with a communication device 1, for example a mobile phone and attaches 6 the mobile phone 1 to the NFC marker 4, so that the customers device 2 with network access is paired with the mobile phone 1, so the identification data of the network and the password (WAP key) are transmitted to the of mobile phone 1 application when reading 7 the NFC tag 4. As a result of this process, the mobile phone 1 can communicate with the device 2 with network access through the automatically configured 8 wireless connection - Wi-Fi. Automation involves selecting and connecting to a wireless network unique to the device 2 with network access using the mobile phone 1 application, which is automatically activated after reading the NFC tag 4 and remotely compares, for example, a voice call with a dedicated technical support hotline and a link to data read from the NFC tag 4 or the device 2 with network access. This link, meaning such compiled 9 communication channel is protected by a unique network access password. Therefore, the mobile phone 1 and the device 2 with network access may be directly communicated. The application, using a dedicated API (Application Programming Interface) for the device with network access read its status. Additionally, the application can also read static information, such as MAC address, serial number, hotline phone number, stored on the NFC tag 4. The device 2 with network access transfers a set of parameters to the mobile phone 1, such as collected logs, for example the status of the ports of the device with network access and statistics about the packets exchanged on each network interface of the device with network access, error status of the device with network access, which will allow for a clear diagnostics. Then the mobile phone 1 automatically compiles 10 the communication channel with the operator's system 3 of the operator's technical support. All read parameters/data is transmitted to the appropriate module, such as a web application which is integrated with the operator's systems 3. This data is sent via an alternative channel, for example using SMS. Then, based on the analysis of the received parameters, that is, for example, checking the configuration status of the physical ports and network interfaces, the correctness of the data entered by the user, the operator's systems 3 identify the device 2 and the customer. Due to successful identification and full knowledge of the condition of the device 2 technical support has all the necessary information to begin the process of repairing the fault. The operators' system 3 of the technical support performs a preliminary analysis of the transmitted data, then using the same alternative channel (the other way the operator's system 3 - customer) sends the repair command to the mobile phone 1 in the form of, for example, the parameters that allow to repair diagnosed failures. The mobile phone 1 can transmit thus obtained parameters to the device 2 with network access, so that the device 2 with network access is able to reconfigure and correct the problem causing the fault. After removing the failure the alternative channel 16 is closed. If the automatic reconfiguration is not possible alternative scenarios are implemented:
- providing repair manual to the customer by displaying it on the communication device 1 or oral explanation by the consultant;
- reporting a failure to be removed by a technical support employee.

In other embodiments, the provider allowing access to the Internet or other services based on the access to the Internet, instead of an NFC tag can put for example, a QR code, bar code, RFID tag, a label for optical OCR on the device 2 with network access of its customers. These information elements 4 store the identification data and the communication channel compilation data, such as following:
- network ID (SSID), key, coding method (WPA) set on the device with network access, hardware address, serial number, a hotline phone number;
- the parameters allowing to compile the connection of the communication device 1 with the device with network access using the Wi-Fi;
- a command for establishing a voice call with a dedicated hotline of the operator's system 3;
- a command for establishing a connection for transferring the data to the hotline operator's systems 3, for example SMS, 3G or other, wherein 3G and SMS may also be used to send messages in the opposite direction, namely from the operator's system 3 to the device 2 with network access.

In a further embodiment, it is possible to pair the communication device 1 with the device 2 with network access by the customer/user manually/by hand entering the data and settings relevant to the communication device 1, rather than through the use of the information element 4.

In a further embodiment the information between the communication device 1 an the operator's systems 3, sent via an alternative communication channel may be sent via SMS, e-mail, data or dtmf during compiled telephone call, using RG data transfer or through the transfer of these parameters with the use of a dedicated IVR.

A dedicated application (computer program) on the communication device 1, included in the embodiments, is able to obtain information for connecting the communication device 1 with the device 2 with network access from the information element 4 or from other sources, such as a memory, operator's system, or through the user interface. It is also able to obtain information needed for authorizing in the device 2 with network access from the information element 4 or from other sources, such as a memory, operator's system, or through the user interface. Additionally, it may for example perform reconfiguration, that is, the process of automatic reconfiguration of the device 2 with network access, which can be understood as a set of actions that the application needs to perform on the device 2 with network access, such as setting the ports, changing the passwords, to restore the proper operation.

In used application of the communication device 1 specific modules can be distinguish that are responsible for the process of configuring the Wi-Fi connection between the device 2 with network access and the communication device 1, such as a module for obtaining a technical status of a device 2, and a module for reading the identification parameters.

The application on the communication device 1 communicates directly with the device 2 with network access using the wireless network, configured before, for example, based on information from the information element 4. The application, as a dedicated computer program, is adapted to the communication device 1 so that the user can install it, run on the communication device 1, and, if necessary, uninstall. The application and the communication device 1 communicate via a dedicated API and a set of programming libraries, specific and adjusted to the communication device 1.

The status/condition of the device 2 with network access is downloaded using the API dedicated from the device 2 with network access. The scope of downloaded parameters depends on the possibility of the API, which means that it is possible to download only those parameters that are readable using the API.

The web application in said embodiment is used to communicate a technical support technician with the device 2 with network access via an alternate link. Thus, the employee examines the data read from the device 2 with network access and can send commands thereto. In addition, in the embodiment with the employee handling the user's request it fulfils the role of an interface through which an employee communicates with the operator's system. Web application, is one of the possible technologies, in which the interface can be implemented, another one is, for example, a desktop application, for example, an application of the operating systems for PCs, or a mobile application - a typical definition of an application for smartphones and tablets.

An embodiment is possible in which, together with the diagnostic data accurate identification data that is read together with the diagnostic data is transmitted to the operator's system 3.

In one embodiment, the diagnostic data is transmitted from the device 2 with network access in response 12 on the condition of the device 2 with network access, sent only after the receipt 11 of the request about the condition of the device 2 with network access. This request can be sent by the communication device 1 after compiling the communication channel between the communication device 1 and the device 2 with network access. Then based on the diagnostic data parameters of the communication channel for example, compiled for the communication with the operator's system 3, can be determined. In another embodiment such request may be sent by the operator's system 3 after compiling the connection between the communication device 1 and the operator's system.

In other embodiments, the request 11 about the condition of the device 2 with network access and the answer to this request 13 is sent repeatedly. It is also possible to repeat for example sending 13 the reconfiguration request together with sending the request about the condition of the device 2 with network access and answers to this requests until the communication with main link is restored 14. Then the message on restoring the communication is sent 15 from the operator's systems 3 to the communication device 1 and the alternative communication channel is closed 16.

In the embodiments the request commands that may be sent by the operator's systems 3 are for example restart, reconfiguration, firmware update, sending a signal to restore the default settings on the device, sending a signal to restore the factory settings on the device, sending the signal setting login and password to connect to the access network, sending a signal setting characteristic parameters of the network configuration, required to compile the connection with the access network.

In another embodiment, the costumer has to pair the mobile phone 1 with the device 2 with network access only once via, for example, scanning a QR code. As a result of such pairing the device 2 with network access and the mobile phone 1 can communicate with each other whenever they are within reach without a customer. When the customer's device 1 with network access detects the failure, it automatically sends the data to the communication device 1, meaning a set of parameters, such as the address of the DNS server, the IP address of the device, device model, version of the software and hardware, firmware version, connection status, error code, time of the last restart, device serial number, date of first registration. The communication device 1 compiles 10 the alternative communication channel, for example e-mail and sends thus received parameters to the operator's system 3, which analyse the data. The operator's systems 3 send appropriate instructions which will eliminate the failure to the mobile phone 1 using the same communication channel The mobile phone 1 sends this instructions directly to the device 2 with network access which performs another reconfiguration resulting in restoring the main link. In this embodiment, the process of reporting and handling the failure takes place without the customer who is not directly involved in the process. Everything is done in the M2M mode (machine to machine), i.e. the device 2 with network access -> the mobile phone 1 -> the operator's system 3 -> the mobile phone 1 -> the device 2 with network access. This embodiment makes it possible to diagnose and automatically repair the failure, often without knowledge of the customer. If the automatic reconfiguration is not possible alternative scenarios presented above are implemented:

In a further embodiment, the communication device 1, for example phablet, reads the information element 4, such as a QR code, which stores the access parameters, that is, ID and password. Then the phablet 1 automatically configures an interface, such as Bluetooth, between the device 2 with network access and the communication device 1. A communication interface configuration is performed automatically on the basis of the data read previously from the information element 4. The application for a phablet 1 interprets the data read from the information element 4 to select the appropriate interface and then automatically enters the password to access the interface without the user. As a result of these operations the communication device 1 and the device 2 with network access can cause direct communication via thus configured interface, the communication channel in the transmission medium. If lack of communication 5 is detected between the network access 2 and the operator's system 3, the application on the communication device 1 requests the device 2 with network access, via a dedicated API to send its current technical condition. The so obtained condition of the communication device 1 is sent to the operator's system 3 through the compiled alternative communication channel, e.g. 3G data transmission in the transmission medium. The operator's systems 3 analyse the status of the device 2 and send it, using the same communication channel, in response to instructions that are aimed at the restoration of basic communication between the device 2 with network access and the operator's systems 3. Sent instructions include specific commands, for example, restart, to repair communication between the device 2 with network access and the operator's systems 3. The communication device 1 after receiving a specific instruction, such as restart, from the operator's systems, calls the appropriate API to perform the instructions on the device 2 with network access. Sending the current condition of the device 2 with network access, sending the instructions from the operator's systems 3 and carrying out appropriate corrective actions in accordance with the instructions sent is executed until the restoration of basic communication. In the event of termination of the repair procedure the application on the communication device 1 closes the communication channel between the communication device 1 and the operator's system 3.

In a further embodiment, the communication device 1, such as a smartphone equipped with NFC technology, reading the NFC tag 4 on the housing of the device 2 with network access, such as a multifunctional CPE with built-in modem, router and VoIP gateway, for example, the Orange Livebox. Wi-Fi ID (SSID) and the password to a given network is saved on the NFC tag 4. From all available networks the communication device 1 selects a name of the one it read from the NFC tag 4 and automatically enters its password. After successful completion of these steps, the communication device 1 and device 2 with network access can communicate with each other using the wireless interface, as the communication channel has been paired 9 in the transmission medium. Then, the communication device 1 sends the request (REST) about the current status of the device 2 via a dedicated API to the device 2 with network access, Livebox, using the http protocol. As a result of such request it receives the feedback (JSON) with the current condition of the device 2 from the device 2 with network access. Then the device 2 with network access communicates with the operator's systems 3 through a compiled 10 alternative communication channel in, the transmission medium, with the help of 3G transmission, to transmit the current status of the access device 2. The operator's systems 3 analyse the received status of the device 2 and send a command to the communication device 1 to change the password settings to access the Internet service on the device 2 with network access. The application on the communication device 1 performs the instructions sent by the operator's systems 3. The application on the communication device 1 changes the password to the device 2 with network access, Livebox, via a dedicated API, according to the preferences of the operator's systems 3. The communication between the device 2, Livebox and the operator's systems 3 is restored, therefore, the application on the communication device 1 disconnects the alternative communication channel with the operator's systems 3.

In a further embodiment, the communication device 1, a smartphone equipped with NFC technology, is reading the NFC tag 4, positioned on the outside of the device 2 with network access, Livebox. Wi-Fi ID (SSID) and the password to a given network is saved on the NFC tag 4. From all available networks the communication device 1 selects a name of the one it read from the NFC tag and automatically enters its password. After successful completion of these steps, the communication device 1 and device 2 with network access can communicate with each other using the wireless interface, as the communication channel has been paired 9. Then, the communication device 1 sends the request (REST) about the current status of the device 2 via a dedicated API to the device 2 with network access, Livebox, using the http protocol. As a result of such request it receives the feedback (in JSON format) with the current condition of the device 2 from the device 2 with network access. Then, the device 2 with network access communicates with the operator's systems 3 through a compiled 10 alternative communication channel, with the help of 3G transmission, to transmit the current status of the device 2 with network access. The operator's systems 3 analyse the received status of the device 2 and send a command to the communication device 1 to change the password settings to access the Internet service on the device 2 with network access. The application on the communication device 1 performs the instructions sent by the operator's systems 3. The application on the communication device 1 changes the password to the device 2 with network access, Livebox, via a dedicated API, according to the preferences of the operator's systems 3. The application receives a message about the failed attempt to change the password, for example, because of the incompatibility of the API after the user's arbitrary interference in the Livebox firmware. The operator's system 3 performs a communication test on the main link, which shows that the communication between the device 2 with network access, Livebox, and the operator's systems 3 has not been restored. The operator's system 3 records the failure notification in the CRM system and sends a message to the user via an alternative communication channel and then disconnects the alternative communication channel.

In another embodiment, the communication device 1, a smartphone equipped with a camera is reading the information element 4, a QR code positioned on the housing of the device 2 with network access, Livebox. Wi-Fi ID (SSID) and the password to a given network is saved on the information element 4. From all available networks the communication device 1 selects a name of the one it read from the information element 4 and automatically enters its password. After successful completion of these steps, the communication device 1 and device 2 with network access can communicate with each other using the wireless interface, as the communication channel has been paired 9 in the transmission medium. The communication device 1 sends the request (REST) about the current status of the device 2 via a dedicated API to the device 2 with network access, Livebox, using the http protocol. As a result of such request it receives the feedback (in JSON format) with the current condition of the device 2 from the device 2 with network access. Then, the device 2 with network access communicates with the operator's systems 3 through a compiled 10 alternative communication channel, with the help of 3G transmission, to transmit the current status of the device 2 with network access. The operator's systems 3 analyse the received status of the device 2 and send 13 a command to the communication device 1 to change the DHCP configuration settings on the device 2 with network access. The application on the communication device 1 performs the instructions sent by the operator's systems 3. The application on the communication device 1 changes the DHCP settings on the device 2 with network access, Livebox, via a dedicated API, according to the preferences of the operator's systems 3. The communication between the device 2 with network access, Livebox and the operator's systems 3 is restored, therefore, the application on the communication device 1 disconnects the alternative communication channel with the operator's systems 3.

In another embodiment, the communication device 1, a smartphone equipped with a camera is reading the information element 4, a tag, a QR code positioned on the housing of the device 2 with network access, Livebox. Wi-Fi ID (SSID) and the password to a given network is on the information element 4. From all available networks the communication device 1 selects a name of the one it read from the information element 4 and automatically enters its password. After successful completion of these steps, the communication device 1 and device 2 with network access can communicate with each other using the wireless interface, as the communication channel has been paired 9. Then, the communication device 1 sends the request (REST) about the current status of the device 2 via a dedicated API to the device 2 with network access, Livebox, using the HTTP protocol. As a result of such request it receives the feedback (in JSON format) with the current condition of the device 2 from the device 2 with network access. Then, the device 2 with network access communicates with the operator's systems 3 through a 10 compiled alternative communication channel, with the help of 3G transmission, to transmit the current status of the device 2 with network access. The operator's systems 3 analyse the received status of the device 2 and send 13 a command to the communication device 1 to change the DHCP configuration settings on the device 2 with network access. The application on the communication device 1 performs the instructions sent by the operator's systems 3. The application on the communication device 1 changes the DHCP settings on the device 2 with network access, Livebox, via a dedicated API, according to the preferences of the operator's systems 3. If the application receives the message about a failed attempt to change the DHCP settings, the operator's system 3 performs a communication test on the main link, which shows that the communication between the device 2 with network access, Livebox, and the operator's systems 3 has not been restored. The operator's system 3 records the failure notification in the CRM system and sends a message to the user via an alternative communication channel and then disconnects the alternative communication channel.

In a further embodiment, the communication device 1, smartphone equipped with a camera is reading the information element 4, a QR code positioned on the housing of the car's diagnostic interface, for example, ODB2, which serves as the device 2 with network access, for example, to manage the fleet of company or rented cars. Wi-Fi ID (SSID) and the password to a given network is saved on the information element 4. From all available networks the communication device 1 selects a name of the one it read from the information element 4 and automatically enters its password. After successful completion of these steps, the communication device 1 and device 2 with network access can communicate with each other using the wireless interface, as the communication channel has been paired 9. Then the communication device 1 sends a request about the current status of the car to the device 2 with network access (ODB2 interface) via the application and a dedicated API. As a result of such request it receives the feedback with the current condition of the diagnosed car from the device 2 with network access. Then, the communication device 1 communicates with the operator's systems, for example with an authorized service car of a given brand through a compiled 10 alternative communication channel, with the help of 3G transmission, to transmit the current status of the device 2 with network access. The operator's systems 3 analyse the received status of the device 2 and a send a request for an in-depth analysis of the status to the communication device 1 to remove the error codes of a diagnosed cars or give a diagnosing person detailed instructions for dealing with the detected fault. In the event of error, which is informative and warning, the application on the communication device 1 receives the command sent by the operator's system 3 and performs the instructions to remove the error code via a dedicated API for a diagnostic interface. In the event of error, which is a fault of the car, the application on the communication device 1 receives the command sent by the operator's systems 3 and communicates it to a diagnosing person in the form of detailed instructions for dealing with detected fault and performs the service instructions to facilitate the diagnostics and removal of failures, as well as the protection of the car from further damage, via a dedicated API for a diagnostic interface. The correct execution of the above steps of the methods completes the communication between the communication device 1 and the operator's systems 3, therefore, the application on the communication device 1 disconnects the Wi-Fi communication channel

All of the above embodiments may be implemented through a system for diagnosing and repairing device with network access according to the invention.

The system for diagnosing and repairing device 2 with network access shown in fig. 2 comprises a communication device 1 and an operator's system 3. The device 2 with network access is connected with the operator's system 3 through the communication device 1 which compiles the communication channels with the device 2 with network access and the operator's system 3. Communication channels are compiled for example based on the data acquired from the information element 4, such as a NFC tag placed on the device 2 with network access. In case of lack of communication 17, the device 2 with network access transmits 18 the diagnostics of the device 2 damaged to the communication device 1. The transfer 18 of diagnostics is done via a dedicated API which communicates with the application of the communication device 1. Then the communication device 1, for example a smartphone sends 19 the data acquired from the operator's systems 3 through the communication channel. Then, based on the analysis of the received parameters, that is, for example, checking the configuration status of the physical ports and network interfaces, the correctness of the data entered by the user, the operator's systems 3 identify the device 2 and the customer. Due to successful identification and full knowledge of the status of device 2 technical support has all the necessary information to begin the process of repairing the fault. The operators' system 3 of the technical support performs a preliminary analysis of the transmitted data, then using the same alternative channel (the other way the operator's system 3 - customer) sends 20 the appropriate repair command to the mobile phone 1 in the form of, for example, the parameters that allow to repair diagnosed fault. These parameters are then transmitted 21 through the communication device 1 to the device 2 with network access.

In an embodiment, the application of the communication device 1 used in the system includes specific modules that are responsible for the process of configuring the Wi-Fi connection between the device 2 with network access and the communication device 1, such as a module for obtaining a technical status of a device 2, and a module for reading the identification parameters. On the basis of thus obtained parameters a message is created that is transmitted to the technical hotline, i.e. the operator's systems 3, for example, while a voice connection is being compiled. Upon receiving the parameters the technical support 3 begins the process of identifying both the device 2, and the customer, therefore they can proceed to the rapid execution of the notification.

The application of the method and system of the invention should not be limited solely to repairing the connections to the access network, since it also enables the remote repair of any other failures, including the connections to the access network.

Indicated embodiments of the invention relating to both a method for diagnosing and repairing the device with network access, as well as diagnosing and repairing the network access are given here only as nonlimiting indications of the invention and cannot limit the scope of protection which is defined in the claims.

## Claims

1. A method for diagnosing and repairing device with network access, **characterized in that** by means of a communication device (1) a communication channel is compiled in the transmission medium between the communication device (1) and a device (2) with network access and the communication channel is compiled in the transmission medium between the communication device (1) and at least one operator's system (3), then, by means of the transmission medium of the communication channel, identification data is sent and at least once the diagnostic data from the device (2) with network access is sent via the communication device (1) to at least one operator's system (3), then at least once by means of the transmission medium of the communication channel, repair command is sent from at least one operator's system (3) via the communication device (1) to the device (2) with network access, and after repairing the device (2) with network access at least one compiled communication channel is closed.

2. A method according to claim 1, **characterized in that** diagnostic data, by means of the communication channel transmission medium, is sent in response to at least one inquiry about the status of the device (2) with network access sent from the operator's system (3).

3. A method according to claim 1 or 2, **characterized in that**, while repairing the device (2) with network access the connection of the device (2) with network access with the access network is repaired too.

4. A method according to any one of the preceding claims, **characterized in that** in the case of a negative outcome of automatic repair of the device (2) with network access by means of the operator's system (3) and via the communication device (1) repair instructions are sent to the user and/or failure of the connection of the device (2) with network access and the access network is recorded.

5. A method according to any one of the preceding claims, **characterized in that** the communication channel between the communication device (1) and the device (2) with network access is compiled based on the information read from an information element (4) associated with the device with network access, wherein the information element (4) is used during the reading, being one of the group including for example: QR code, bar code, NFC tag, RFID tag, an optical label for OCR.

6. A method according to any one of the claims 1-4, **characterized in that** the communication channel between the communication device (1) and the device (2) with network access is compiled manually.

7. A method according to claim 5, **characterized in that** the information element (4) is used during the reading, comprising data of the communication channel compilation and/or identification data of the device (2) with network access, additionally the information element (4) being one of the group including for example: QR code, bar code, NFC tag, RFID tag, an optical label for OCR is used during the reading.

8. A method according to any one of the preceding claims, **characterized in that** communication channels are compiled in at least one technology from a group including for example: Wi-Fi, Bluetooth, tethering, voice call, IVR, SMS, e-mail, REST, higher layer communication protocols, 3G, GPRS, EDGE, LTE, 5G data transmission, dtmf during a call, USSD, fixed line network; additionally a device from a group including for example: a phone, PDA, tablet, phablet, laptop, notebook, desktop, smartphone, smart watch, smart glasses is used as a communication device (1); and a device from a group including for example: CPE class devices, such as a modem, router, switch, set-top box, VoIP gateway, PBX devices, firewalls, game consoles, devices for managing smart home, TVs, cars, household appliances and IoT and M2M class equipment is used as a device (2) with network access.

9. A method according to any one of the preceding claims, **characterized in that** as the diagnostic data at least one from a group including: port status of the device with network access, statistics on packets exchanged on each network interface of the device (2) with network access, error status of the device (2) with network access is used; as the identification data and/or the compilation data of the communication channel at least one from a group including: a network ID, key, the encoding set on the device with network access, hardware address, serial number, a hotline phone number is used.

10. A method according to any one of the preceding claims, **characterized in that** the method steps performed by the communication device (1) are performed under the control of a computer program.

11. A system for diagnosing and repairing device with network access, comprising a communication device and at least one operator's system, **characterized in that** the device (2) with network access is connected with at least one operator's system (3) via the communication device (1) which compiles a communication channel with the device (2) with network access and at least one operator's system (3).

12. The system according to claim 11, **characterized in that** the device (2) with network access is connected to an information element (4), and the information element (4) is one of a group including for example: a QR code, bar code, NFC tag, RFID tag, an optical label for OCR.

13. A system according to any one of the claims 11 or 12, **characterized in that** communication channels are compiled in at least one technology from a group including for example: Wi-Fi, Bluetooth, tethering, voice call, IVR, SMS, e-mail, REST, higher layer communication protocols, 3G, GPRS, EDGE, LTE, 5G data transmission, dtmf during a call, USSD, fixed line network; wherein a communication device (1) is one from a group including for example: a phone, PDA, tablet, phablet, laptop, notebook, desktop, smartphone, smart watch, smart glasses; and a device (2) with network access is one from a group including for example: CPE class devices, such as a modem, router, switch, set-top box, VoIP gateway, PBX devices, firewalls, game consoles, devices for managing smart home, TVs, cars, household appliances and IoT and M2M class equipment.

14. A system according to any one of the claims 11 - 13, **characterized in that** the communication device (1) using a computer program is adapted to perform at least one of the tasks from a group including reading the information from an information element (4), a compilation of the communication channel, and performance of the instructions sent by at least one operator's system (3).

15. The system according to claim 14, **characterized in that** the computer program comprises a configuration module of the compiled channel, a module of acquiring the technical status of the device (2) and a module for reading identification parameters.
